# EUROPÄISCHE PATENTSCHRIFT

(11) **EP 0 458 156 B1**
(45) Veröffentlichungstag und Bekanntmachung des Hinweises auf die Patenterteilung: **20.10.1993**
(21) Anmeldenummer: 91107676.8
(22) Anmeldetag: 11.05.1991
(51) Int. Cl.: B61D 23/02

(54) **Mehrstufiger Klapptritt für spurgebundene Fahrzeuge**
Folding multiple step stair for railway vehicles
Marchepied pliant à marches multiples pour véhicules ferroviaires

(30) Priorität: 23.05.1990 DE 4016620
(43) Veröffentlichungstag der Anmeldung: 27.11.1991
(73) Patentinhaber: MAN GHH Schienenverkehrstechnik GmbH, 90461 Nürnberg (DE)
(72) Erfinder: Renner, Anton, W-8851 Huisheim (DE); Hofer, Franz, W-8850 Donauwörth (DE)
(74) Vertreter: Merten, Fritz

(56) Entgegenhaltungen:
- EP-A- 0 259 886
- DE-C- 3 812 564
- FR-A- 2 142 787
- FR-A- 2 534 202
- US-A- 4 161 997

## Beschreibung

Die Erfindung betrifft einen Klapptritt gemäß dem Oberbegriff des Patentanspruchs 1.

Bei auf einem aufgeständerten Fahrweg verkehrenden Fahrzeugen, wie Magnetschwebefahrzeugen, stellt sich das Problem, im Falle eines Nothaltens einen Ausstieg der Passagiere über die Stirnseiten des Fahrzeugs entweder auf den Fahrweg als Laufsteg oder wenigstens im Übergang zu einem (zu Hilfszwecken) aufschließenden Fahrzeug zu ermöglichen. Diese beiden Funktionen vermögen beispielsweise die durch die DE-PS 16 05 042 oder DE-PS 33 01 746 bei Eisenbahnfahrzeugen bekannten Klapptritte der eingangs genannten Art nicht zu erfüllen, weil sie auf den normalen Ein- und Ausstieg beschränkt und folglich nur für das Aus- bzw. Einklappen (bzw. -Fahren) quer zur Fahrzeuglängsmittelebene ausgebildet sind. Soweit im übrigen schon ein Notausstieg für die Stirnseite eines Schienenfahrzeuges vorgeschlagen wird, ist dieser gemäß der EP 0 142 851 auf eine spezielle Ausgestaltung einer stirnseitigen Fahrzeugtür und deren Nutzung als klappbare Treppenrampe beschränkt.

Der Erfindung liegt daher die Aufgabe zugrunde, einen Klapptritt der eingangs genannten Art für einen Notausstieg über durch einfache Türen geschlossene stirnseitige Fahrzeugausgänge zu schaffen, welcher das (stirnseitige) Verlassen des Fahrzeugs wahlweise entweder im Übergang zu einem anderen aufschließenden Fahrzeug oder durch einen Abstieg auf einen begehbaren Fahrweg ermöglicht.

Diese Aufgabe ist für einen gattungsgemäßen Klapptritt mit den kennzeichnenden Merkmalen des Patentanspruchs 1 gelöst. Demnach ist der Klapptritt gemäß der Erfindung eine nicht nur raumsparend z.B. in einer Unterflurkammer verstaubare Stufenleiter, welche aus der Stauposition heraus durch bloße Positionsänderung zunächst eine Übergangsbrückenhälfte ggf. zu einer gleichartigen eines zweiten Fahrzeugs wird oder ausgehend von dieser Positionsänderung durch bloßes Entfalten eine für den Abstieg nutzbare Treppe. Diese Positionsänderung ist gemäß der im Anspruch 2 gekennzeichneten Ausgestaltung mit einfachen technischen Mitteln sicher vollziehbar. Zudem kann gemäß den in den Ansprüchen 3 und 4 gekennzeichneten Ausgestaltungen ohne irgend einen manuellen Eingriff aus der Verwendungsform "Übergangsbrückenhälfte" die Verwendungsform "Treppe" entstehen, wozu es mit den in den Ansprüchen 5 und 6 gekennzeichneten Ausgestaltungen lediglich des Ausfahrens des Basisleiterteils in seine Endlage bedarf. Dabei läßt sich durch die Ausgestaltung gemäß Anspruch 6 aufgrund der Endlagendämpfung der Gasfeder ein sanftes Entfalten der Stufenleiter bzw. des Schwenkleiterteils erreichen. Schließlich kann das Schwenkleiterteil sogar mit der im Anspruch 7 gekennzeichneten Ausgestaltung verschiedenen Fahrweghöhen anpaßbar sein, was selbstverständlich auch für die Ausbildung dieses weiteren (ggf. teleskopisch längenveränderbaren) Leiterteils gilt.

Nachfolgend wird die Erfindung anhand eines Ausführungsbeispiels weiter erläutert. Hierbei zeigt die Zeichnung in
- Fig. 1: in einer Seitenansicht einen gefalteten Klapptritt eines Schienenfahrzeugs in der Faltlage und in eingefahrener Position an der Fahrzeugstirnseite,
- Fig. 2: den Klapptritt gemäß Fig. 1 in ausgefahrener Position,
- Fig. 3: in kleinerem Maßstab den Klapptritt gemäß Fig. 1 in der Position gemäß Fig. 2 und in entfalteter Lage,
- Fig. 4: eine vergrößerte Darstellung der die in Fig. 1 und 2 dargestellte Faltlage des Klapptrittes sichernden Verriegelungsmittel.

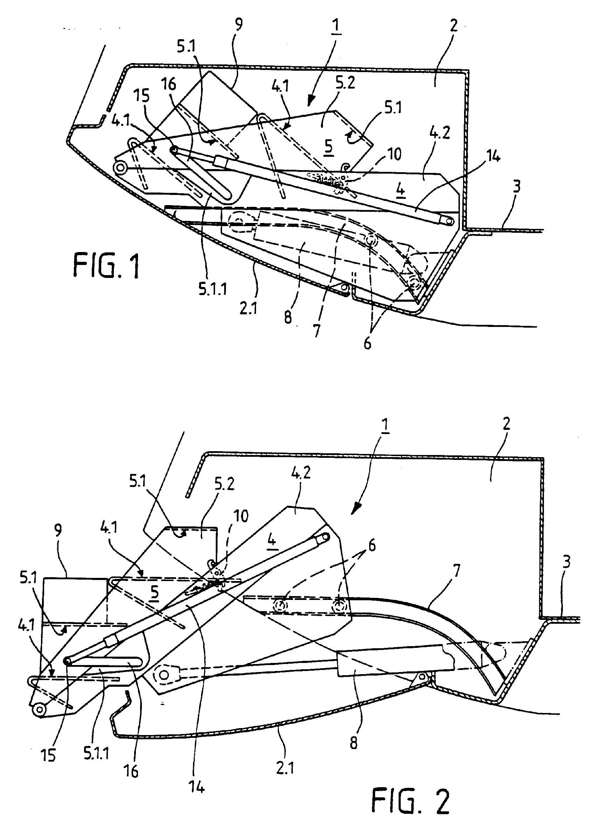

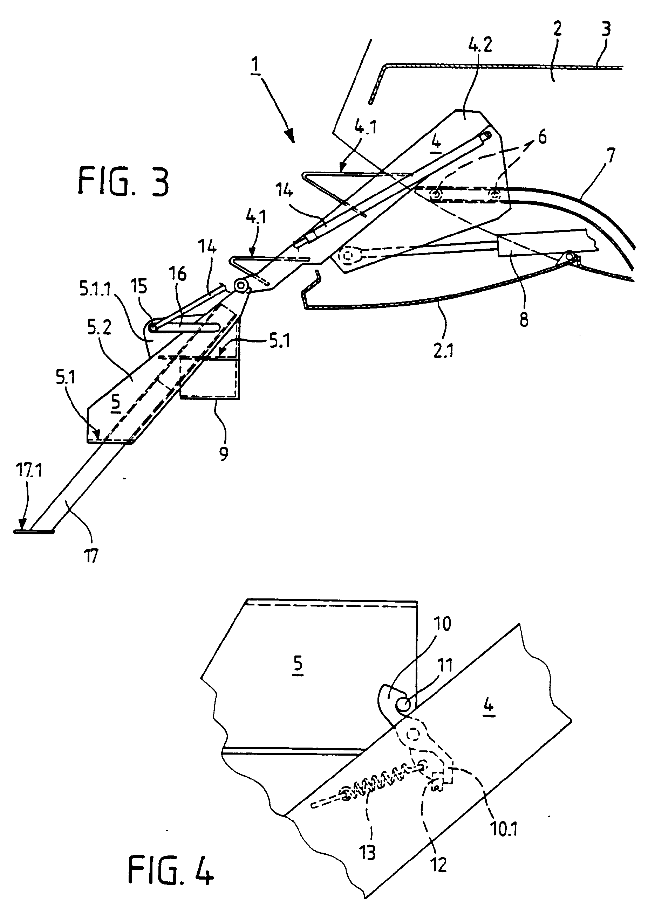

Beispielsweise bei einer Bahnanlage mit auf einem aufgeständerten Fahrbalken spurgeführten Fahrzeugen für den Personentransport sind diese zum Zwecke des Notausstieges über stirnseitige Fahrzeugausgänge je Stirnseite mit dem in Fig. 1 bis 3 dargestellten Klapptritt ausgerüstet, welcher in der Gestalt einer faltbaren Stufenleiter 1 bezüglich einer mit einem ausklinkbaren Deckel 2.1 verschließbaren separaten Kammer 2 am Boden 3 des einzelnen (sonst nicht weiter dargestellten) Fahrzeugs aus- und einfahrbar ist. Die Grundbauteile dieser Stufenleiter 1 sind ein Basisleiterteil 4 und ein hieran um eine in Fahrzeugquerrichtung verlaufende Achse drehwinkelbeweglich angelenktes Schwenkleiterteil 5, welche jeweils mit Trittstufen 4.1 bzw. 5.1 zwischen Holmen 4.2 bzw. 5.2 versehen sind. Das Basisleiterteil 4 ist mittels Laufrollen 6 an seinen beiden Holmen 4.2 in gebogenen Führungsschienen 7 längsverschiebbar, welche eine Führungsbahn von solcher Krümmung beschreiben, daß das Basisleiterteil 4 beim Verschieben z.B. mittels eines hydraulischen oder pneumatischen Arbeitszylinders 8 aus der eingefahrenen (Stau-) Position der Stufenleiter 1 (Fig. 1) in eine ausgefahrene Position (Fig. 2) zwangsläufig eine Lageänderung erfährt. Infolge dieser Lageänderung nehmen gemäß Fig. 2 und 3 die Trittstufen 4.1 des Basisleiterteils 4 bereits die Stellung ein, in welcher sie begehbar sind. In dieser ausgefahrenen Position des Basisleiterteils 4 hat die Stufenleiter 1 erforderlichenfalls die Funktion einer Übergangsbrückenhälfte, über welche Personen z.B. zu einer nicht dargestellten weiteren solchen (anschließenden) Übergangsbrückenhälfte eines anderen aufgeschlossenen Fahrzeugs gelangen können. Hierbei ist das Schwenkleiterteil 5, wie in der eingefahrenen Position der Stufenleiter 1 (Fig. 1), am Basisleiterteil 4 verriegelt gehalten und über ein rückseitiges Podest 9 begehbar, welches an der bereits freien oberen Trittstufe 4.1 des Basisleiterteils 4 anschließt. Die Verriegelung des Schwenkleiterteils 5 am Basisleiterteil 4 in der Faltlage gemäß Fig. 1 und 2 bewirkt je Leiterseite ein Verriegelungshaken 10 am Basisleiterteil 4 im Eingriff mit einem Verriegelungszapfen 11 am Schwenkleiterteil 5. Diese Verriegelung wird selbsttätig gelöst, sobald das Basisleiterteil 4 in der in Fig. 2 dargestellten ausgefahrenen Position in eine Endlage gebracht wird, zu deren Einstellung lediglich eine bestimmte Druckkraftsteigerung des Arbeitszylinders 8 erforderlich ist. Denn wie Fig. 4 verdeutlicht, ist das Basisleiterteil 4 in der ausgefahrenen Position (Fig. 2) am Erreichen seiner Endlage mittels eines Richtgesperres (je Leiterseite) gehindert, bei welchem eine stationäre, d.h. fahrzeugseitige Klinke 12 den am Basisleiterteil 4 schwenkbaren und durch eine Schraubenfeder 13 in seiner Verriegelungsstellung gehaltenen Verriegelungshaken 10 über einen Hebelfortsatz 10.1 desselben sperrt und bei entsprechender Druckkraft am Basisleiterteil 4 zum Ausklinken am Verriegelungszapfen 11 bringt; in Rücklaufrichtung des Basisleiterteils 4 ist diese stationäre Klinke 12 durch den Hebelfortsatz 10.1 gegen Federkraft wegschwenkbar, also kein Hindernis. In der Endlage des Basisleiterteils 4 mit entriegeltem Schwenkleiterteil 5 werden diese und damit die Stufenleiter 1 selbsttätig entfaltet, und zwar gemäß Fig. 3 unter Schwenkung des Schwenkleiterteils 5 in eine mit dem Basisleiterteil 5 abwärts gerichtete (vorzugsweise fluchtende) Lage. Hierdurch werden weitere Trittstufen 4.1 und 5.1 freigegeben; zweckmäßig ist auch die Rückseite des nun funktionslosen Podestes 9 als Trittstufe 5.1 nutzbar gestaltet. Das selbsttätige Entfalten der Stufenleiter 1 bewirkt eine Federung vorzugsweise aus einer Gasfeder 14 (je Leiterseite), also einer Kolben-/Zylindereinheit mit eingeschlossenem kompressiblen Medium, welche einerseits am Basisleiterteil 5 schwenkbar angelenkt ist und andererseits über eine Laufrolle 15 in eine am Schwenkleiterteil 6 sich erstreckende Kulissenführung 16 eingreift, wofür es einer Konsole 5.1.1 am jeweiligen Holm 5.2 des Schwenkleiterteils 5 bedarf. Aufgrund dieser Kulissenführung 16 für das schwenkleiterteilseitige Ende der einzelnen Gasfeder 14 hat deren Expansion eine Schwenkbewegung des Schwenkleiterteils 5 um den vollen Entfaltungswinkel der Stufenleiter 1, nämlich von 180° in die vollständig entfaltete Lage gemäß Fig. 3 zur Folge. In dieser Lage erfüllt die Stufenleiter 1 die Funktion einer Treppe zu einem nicht dargestellten Laufsteg des Fahrbalkens. Je nach Gestaltung desselben ist noch gemäß Fig. 3 zum bedarfweisen Ausgleich von Höhenunterschieden das Schwenkleiterteil 5 mittels eines schiebebewegbar integrierten weiteren Leiterteils 17 mit Trittstufen 17.1 längenveränderbar; dieses Leiterteil 17 kann erforderlichenfalls auch selbst teleskopartig längenveränderbar gestaltet sein.

## Patentansprüche

1. Klapptritt für spurgebundene Fahrzeuge, insbesondere Schienenfahrzeuge, mit aus einer Position im Fahrzeug über das Fahrzeugprofil ausfahrbaren Trittstufen,
**dadurch gekennzeichnet**,
daß die Trittstufen (4.1, 5.1, 17.1) die Sprossen einer an der Fahrzeugstirnseite gefaltet aus- und einfahrbaren Stufenleiter (1) wenigstens aus einem längs einer Führungsbahn (7) lageänderbar verschiebbaren Basisleiterteil (4) und einem hieran in seiner Faltlage verriegelt angelenkten Schwenkleiterteil (5) sind, wobei die gefaltete Stufenleiter (1) zum einen in einer ausgefahrenen Position des Basisleiterteils (4) eine aus dessen oberer Trittstufe (4.1) und einem anschließenden rückseitigen Podest (9) des Schwenkleiterteils (5) gebildete Übergangsbrückenhälfte ist und zum anderen erst aus dieser ausgefahrenen Position des Basisleiterteils (4) entfaltbar ist, und wobei das hiervon entriegelte Schwenkleiterteil (5) unter Schwenkung in eine mit dem Basisleiterteil (4) abwärts gerichtete Lage weitere Trittstufen (4.1, 5.1, 17.1) freigibt.

2. Klapptritt nach Anspruch 1,
**dadurch gekennzeichnet**,
daß die Führungsbahn des Basisleiterteils (4) durch nach Maßgabe der geforderten Lageänderbarkeit in Fahrzeuglängsrichtung gebogene Führungsschienen (7) für beiderseits des Basisleiterteils (4) angeordnete Laufrollen (6) vorgegeben ist.

3. Klapptritt nach Anspruch 1,
**dadurch gekennzeichnet**,
daß das Schwenkleiterteil (5) vom Basisleiterteil (4) in einer in seiner ausgefahrenen Position einstellbaren Endlage desselben selbsttätig entriegelbar ist.

4. Klapptritt nach Anspruch 1 und 3,
**dadurch gekennzeichnet**,
daß das Basisleiterteil (4) in seiner ausgefahrenen Position am Erreichen der Endlage mittels eines Richtgesperres gehindert ist, bei welchem eine stationäre Klinke (12) einen am Basisleiterteil (4) im Eingriff mit einem Verriegelungszapfen (11) des Schwenkleiterteils (5) schwenkbar angeordneten, durch Federkraft in seiner Verriegelungsstellung gehaltenen Verriegelungshaken (10) über einen Hebelfortsatz (10.1) desselben sperrt und in Rücklaufrichtung des Basisleiterteils (4) durch diesen Hebelfortsatz (10.1) gegen Federkraft schwenkbar ist.

5. Klapptritt nach Anspruch 1,
**dadurch gekennzeichnet**,
daß das Basisteil (4) und das entriegelte Schwenkleiterteil (5) durch eine Federung (14) selbsttätig entfaltbar sind.

6. Klapptritt nach Anspruch 5,
**dadurch gekennzeichnet**,
daß die Federung wenigstens eine einerseits am Basisleiterteil (4) schwenkbare Gasfeder (14) aufweist, welche andererseits über eine Laufrolle (15) in eine am Schwenkleiterteil (5) derart angeordnete Kulissenführung (16) eingreift, daß die Expansion der Gasfeder (14) eine Schwenkbewegung des Schwenkleiterteils (5) um einen Winkel bis zur vollen Entfaltung der Stufenleiter (1) bewirkt.

7. Klapptritt nach Anspruch 1,
**dadurch gekennzeichnet**,
daß das Schwenkleiterteil (5) mittels eines schiebebewegbar integrierten weiteren Leiterteils (17) längenveränderbar ist.

## Claims

1. A folding step for guided vehicles, especially rail vehicles, comprising steps extendable from a position in the vehicle over the vehicle profile, characterized in that the steps (4.1, 5.1, 17.1) are the rungs of a ladder (1) which can be drawn in and extended foldedly at the vehicle end, said ladder (1) consisting at least of a base ladder part (4) displaceable position-alterably along a guideway (7) and a swivel ladder part (5) hinged thereto locked in its folded position, the folded ladder (1) being on the one hand, when the base ladder part (4) is in an extended position, a gangway half consisting of the upper step (4.1) thereof and an adjacent rear platform (9) of the swivel ladder part (5) and on the other hand can be unfolded only from this extended position of the base ladder part (4), the swivel ladder part (5) unlocked thereby releasing further steps (4.1, 5.1, 17.1) when swivelled into a downwardly directed position with the base ladder part (4).

2. A folding step according to claim 1, characterized in that the guideway of the base ladder part (4) is predetermined by guide rails (7) curved according to the required degree of position alteration in the longitudinal direction of the vehicle, said guide rails (7) being for castors (6) arranged on both sides of the base ladder part (4).

3. A folding step according to claim 1, characterized in that the swivel ladder part (5) can be automatically unlocked from the base ladder part (4) in a final position thereof adjustable in its extended position.

4. A folding step according to claims 1 and 3, characterized in that the base ladder part (4) is stopped in its extended position upon reaching the final position by means of a directional locking mechanism, in which a stationary catch (12) locks a locking hook (10), which is arranged swivellably at the base ladder part (4) in engagement with a locking pin (11) of the swivel ladder part (5) and which is held in its locking position by spring force, via a lever extension (10.1) thereof and can, in the return direction of the base ladder part (4), be swivelled away by this lever extension (10.1) against spring force.

5. A folding step according to claim 1, characterized in that the base part (4) and the unlocked swivel ladder part (5) are automatically unfoldable by a spring system (14).

6. A folding step according to claim 5, characterized in that the spring system comprises at least one swivellable gas spring (14) on one side of the base ladder part (4), which gas spring (14) engages on the other side via a castor (15) in a slide guide (16) arranged on the swivel ladder part (5) in such a way that expansion of the gas spring (14) effects a swivel movement of the swivel ladder part (5) about an angle until the ladder (1) is fully unfolded.

7. A folding step according to claim 1, characterized in that the swivel ladder part (5) can be varied in length by means of a further, slide-movable, integral ladder part (17).

## Revendications

1. Marchepied escamotable pour véhicules sur voies, en particulier des véhicules sur rails, comportant des marches qui se déploient par-dessus le profil du véhicule, depuis une position située à l'intérieur de ce dernier, caractérisé en ce que les marches (4.1, 5.1, 17.1) constituent les échelons d'une échelle (1) qui sort et rentre à l'état replié sur le côté frontal du véhicule, et qui comporte au moins une partie d'échelle de base (4) qui coulisse de manière transposable le long d'une voie de glissière (7), et une partie d'échelle basculante (5) verrouillée à l'état replié, qui lui est articulée, ladite échelle repliée (1) constituant, en position développée de la partie d'échelle de base (4), une moitié de passerelle formée par sa marche supérieure (4.1) et un palier arrière (9), qui vient à sa suite, de la partie d'échelle basculante (5), d'une part, et ne pouvant, d'autre part, être déployée qu'à partir de cette position développée de la partie d'échelle de base (4), et la partie d'échelle basculante (5), déverrouillée par ce processus, libérant d'autres marches (4.1, 5.1, 17.1) en basculant dans une position orientée vers le bas, en parallèle avec la partie d'échelle de base (4).

2. Marchepied escamotable suivant la revendication 1, caractérisé en ce que la voie de glissière de la partie d'échelle de base (4) est définie par des rails de guidage (7) incurvés dans le sens de la longueur du véhicule, pour satisfaire à la transposabilité requise, qui reçoivent des galets de roulement (6) montés de part et d'autre de la partie d'échelle de base (4).

3. Marchepied escamotable suivant la revendication 1, caractérisé en ce que la partie d'échelle basculante (5) peut se déverrouiller automatiquement sous l'action de la partie d'échelle de base (4), dans une position extrême et réglable dans la position développée de cette dernière.

4. Marchepied escamotable suivant les revendications 1 et 3, caractérisé en ce que la partie d'échelle de base (4) est bloquée dans sa position développée à l'atteinte de sa position extrême, au moyen d'un encliquetage-guide, dans lequel un cliquet fixe (12), d'une part, bloque un crochet de verrouillage (10), par l'intermédiaire d'un prolongement (10.1) de celui-ci, formant un levier, crochet qui est monté de façon à pouvoir pivoter sur la partie d'échelle de base (4), en engagement avec un pivot de verrouillage (11) de la partie d'échelle basculante (5), et est maintenu dans sa position verrouillée sous l'effet d'un ressort, et d'autre part, peut être basculé par ce prolongement en forme de levier (10.1) dans le sens de la course arrière de la partie d'échelle de base (4), en vaincant l'effort antagoniste d'un ressort.

5. Marchepied escamotable suivant la revendication 1, caractérisé en ce que la partie d'échelle de base (4) et la partie d'échelle basculante (5) déverrouillée peuvent être déployées automatiquement par un montage à ressort (14).

6. Marchepied escamotable suivant la revendication 5, caractérisé en ce que le montage à ressort comporte au moins un ressort à gaz (14) pivotant sur la partie d'échelle de base (4), et qui s'engage d'autre part, par le biais d'un galet de roulement (15), dans un guide à coulisse (16) monté sur la partie d'échelle basculante (5) de manière à ce que l'expansion du ressort à gaz (14) provoque un basculement de la partie d'échelle basculante (5) autour d'un angle, jusqu'au déploiement complet de l'échelle (1).

7. Marchepied escamotable suivant la revendication 1, caractérisé en ce qu'une partie d'échelle supplémentaire (17) coulissante intégrée permet de faire varier la longueur de la partie d'échelle basculante (5).
